# EUROPÄISCHE PATENTSCHRIFT

(11) **EP 2 939 773 B1**
(45) Veröffentlichungstag und Bekanntmachung des Hinweises auf die Patenterteilung: **10.07.2019**
(21) Anmeldenummer: 14166299.9
(22) Anmeldetag: 29.04.2014
(51) Int. Cl.: B23B 31/20

(54) **Spannvorrichtung**
Clamping device
Dispositif de serrage

(43) Veröffentlichungstag der Anmeldung: 04.11.2015
(73) Patentinhaber: Narr Beteiligungs GmbH, 73230 Kirchheim/Teck (DE)
(72) Erfinder: Mauch, Peter, 78598 Königsheim (DE)
(74) Vertreter: Ruckh, Rainer Gerhard

(56) Entgegenhaltungen:
- EP-A2- 0 428 058
- WO-A1-2013/123556
- DE-U1-202013 103 278

## Beschreibung

Die Erfindung betrifft eine Spannvorrichtung gemäß dem Oberbegriff des Patentanspruchs 1.

Derartige Spannvorrichtungen dienen generell zum Spannen eines Werkstücks. Hierzu weist die Spannvorrichtung ein Spannfutter und eine in dem Spannfutter gelagerte Spannzange auf. Die Spannzange dient zum Befestigen des jeweiligen Werkstücks. Die Spannzange wird hierzu, vorzugsweise über eine Zugstange, die insbesondere mittels einer Antriebseinheit betätigt, das heißt verschoben wird, betätigt. Die Spannzange ist hierzu vorteilhaft aus mehreren Spannzangensegmenten aufgebaut, die Stellbewegungen ausführen können und so das zu spannende Werkstück klemmen und auch wieder freigeben können.

Soll die Spannvorrichtung zum Spannen verschiedenartiger Werkstücke eingesetzt werden, muss bei der Spannvorrichtung die Spannzange am Spannfutter ausgetauscht werden. Ein Problem bei bekannten Spannvorrichtungen besteht darin, dass hierzu spezielle Hilfswerkzeuge notwendig sind, mittels derer die auszutauschende Spannzange am Spannfutter gelöst werden muss, um sie dann aus dem Spannfutter entnehmen zu können. In entsprechender Weise muss das Hilfswerkzeug eingesetzt werden, um die neue Spannzange im Spannfutter zu fixieren.

Der Einsatz der Hilfswerkzeuge bedeutet einen unerwünschten zusätzlichen konstruktiven Aufwand zur Ausbildung der Spannvorrichtung. Weiter ist nachteilig, dass die Hilfswerkzeuge lose Teile bilden, die separat aufbewahrt werden müssen. Oft stehen dann die Hilfswerkzeuge nicht zur Verfügung, wenn eine Spannzange am Spannfutter gewechselt werden muss, so dass ein zusätzlicher Aufwand für das Suchen oder Beschaffen des Hilfswerkzeugs entsteht.

Aus der DE 20 2013 103 278 ist eine Spannvorrichtung bekannt, welche zum Spannen eines Werkstücks dient und ein Spannfutter und eine im Spannfutter gelagerte Spannzange aufweist. Mittels eines Bajonettverschlusses kann die Spannzange werkzeuglos im Spannfutter befestigt oder von diesem gelöst werden.

Eine gattungsgemäße Spannvorrichtung ist aus EP 0 428 058 A2 bekannt. Dort ist ein Spannfutter für Werkzeugmaschinen beschrieben, welches einen eine kegelstumpfförmige Ausnehmung mit Führungsflächen aufweisenden Futterkörper aufweist, in den ein mit einer Zugeinrichtung zusammenarbeitender und Spannbacken mit Gegenführungsflächen besitzender Spannkopf mit einer axialen Aufnahmeöffnung für Werkstücke einbringbar ist. Die Führungsflächen stehen mit den Gegenführungsflächen in Druckverbindung. Der Spannkopf besitzt radial ausgerichtete Aufnahmen für die radial verstellbaren Spannbacken. Der Spannkopf besitzt eine nach außen hin offene Ausnehmung, in die im Betriebszustand des Spannkopfs ein federbelasteter Rastbolzen des Futterkörpers eingreift.

Der Erfindung liegt die Aufgabe zugrunde, eine Spannvorrichtung der eingangs genannten Art bereitzustellen, welche bei konstruktiv geringem Aufwand eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Spannvorrichtung dient zum Spannen eines Werkstücks und umfasst ein Spannfutter und eine im Spannfutter gelagerte Spannzange. Ein Bajonettverschluss ist vorgesehen, mittels dessen die Spannzange werkzeuglos am Spannfutter befestigt oder von diesem gelöst werden kann und wobei die Spannzange gegen einen feststehenden Teil des Spannfutters zwischen einer Spannstellung und einer Lösestellung bewegt werden kann. Im feststehenden Teil des Spannfutters ist wenigstes ein Verriegelungselement gelagert, welches den Bajonettverschluss in der Spannstellung gegen ein Lösen sichert und welches den Bajonettverschluss in der Lösestellung für eine Betätigung freigibt. Der Bajonettverschluss weist einen manuell betätigbaren Betätigungsring sowie einen in Wirkverbindung mit dem Betätigungsring stehenden Bajonettring, mittels dessen die Spannzange am Spannfutter fixierbar ist, aufweist, und die Spannvorrichtung (1) dazu vorgesehen ist, dass in der Spannstellung das wenigstens eine Verriegelungselement den Bajonettring gegen ein Verdrehen sperrt und in der Lösestellung das wenigstens eine Verriegelungselement den Bajonettring freigibt.

Ein wesentlicher Vorteil der erfindungsgemäßen Spannvorrichtung besteht darin, dass die Spannzange im Spannfutter ohne Einsatz von zusätzlichen Hilfswerkzeugen montiert und bei Bedarf wieder aus dem Spannfutter ausgebaut werden kann. Zur Fixierung der Spannzange im Bajonettverschluss muss eine Bedienperson lediglich den Bajonettverschluss manuell betätigen.

Der Bajonettverschluss bildet einen integralen Bestandteil der Spannvorrichtung und ist damit unverlierbar an der Spannvorrichtung angebracht. Das Betätigen des Bajonettverschlusses kann von einer Bedienperson einfach und schnell durchgeführt werden, so dass die Montagezeiten für einen Einbau oder Ausbau der Spannzange sehr gering gehalten werden können.

Durch das oder die Verriegelungselemente wird gewährleistet, dass der Bajonettverschluss während des Betriebs der Spannvorrichtung sicher verschlossen bleibt und sich selbst bei äußeren Krafteinwirkungen nicht unkontrolliert löst. Damit wird gewährleistet, dass sich während des Betriebs der Spannvorrichtung ein in der Spannzange fixiertes Werkstück nicht unkontrolliert lösen kann.

Ein wesentlicher Vorteil der Erfindung besteht darin, dass zur Betätigung der Verriegelungselemente keine zusätzlichen Einstellvorgänge oder separate Betätigungen der Spannvorrichtung durch eine Bedienperson erforderlich sind. Vielmehr erfolgt das Betätigen des oder der Verriegelungselemente selbsttätig, wenn die Spannzange in ihre Lösestellung beziehungsweise Spannstellung überführt wird. Damit wird einerseits ein hoher Bedienkomfort erzielt. Zudem wird eine fehlersichere Bedienung der Spannvorrichtung gewährleistet, da die Bedienperson nicht aktiv das oder die Verriegelungselemente betätigen muss, so dass eine Fehlbedienung derart, dass die Bedienperson das Betätigen des oder der Verriegelungselements vergisst, ausgeschlossen ist.

Gemäß einer vorteilhaften Ausführungsform weist die Spannvorrichtung drei identische, in Umfangsrichtung jeweils um 120° zueinander versetzte Verriegelungselemente auf.

Durch diese drehsymmetrische Anordnung ist eine über den Umfang der Spannvorrichtung gleichförmige Verriegelung des Bajonettverschlusses gewährleistet.

Erfindungsgemäß weist der Bajonettverschluss einen manuell betätigbaren Betätigungsring sowie einen in Wirkverbindung mit dem Betätigungsring stehenden Bajonettring auf, mittels dessen die Spannzange am Spannfutter fixierbar ist. In der Spannstellung sperrt wenigstens ein Verriegelungselement den Bajonettring gegen ein Verdrehen und in der Lösestellung gibt wenigstens ein Verriegelungselement den Bajonettring frei.

Die Verriegelung des Bajonettverschlusses erfolgt somit vorteilhaft derart, dass in der Spannstellung das wenigstens ein Verriegelungselement in eine Nut des Bajonettrings greift.

Der so gebildete Verriegelungsmechanismus weist einen konstruktiv einfachen Aufbau auf.

Das Funktionsprinzip des Verriegelungsmechanismus ist derart, dass die Verriegelungselemente feststehend im Spannfutter, vorzugsweise im Futterkörper des Spannfutters, gelagert sind.

Die Verriegelung des Bajonettverschlusses erfolgt dann derart, dass der Bajonettring mit der Spannzange zwischen der Lösestellung und der Spannstellung bewegt wird.

Damit wird bei dem Spannen der Spannzange, das vorzugsweise mittels einer Spannhülse durchgeführt wird, das wenigstens ein Verriegelungselement in die Nut des Bajonettrings dadurch eingeführt, dass der Bajonettring gegenüber dem feststehend gelagerten Verriegelungselement bewegt wird.

Vorteilhaft wird durch Drehen des Betätigungsrings der Bajonettring zwischen einer Verschlussposition, in welcher der Bajonettring die Spannzange am Spannfutter fixiert, und einer Öffnungsposition, in welcher der Bajonettring die Spannzange am Spannfutter freigibt, bewegt. Nur in der Verschlussposition des Bajonettrings ist das oder jedes Verriegelungselement der jeweiligen Nut so zugeordnet, dass das Verriegelungselement bei Bewegen der Spannzange in die Spannstellung in die Nut einfahren kann.

Ist dagegen der Bajonettring nicht in der Verschlussposition angeordnet, und die Spannzange wird von der Lösestellung in die Spannstellung bewegt, würde der Bajonettring, da dessen Nut nicht auf das Verriegelungselement ausgerichtet ist, bei Einfahren der Spannzange in die Spannstellung gegen das Verriegelungselement drücken und dieses beschädigen oder zerstören.

Um dies auszuschließen ist ein Sicherheitsmechanismus vorgesehen. Hierzu ist das oder jedes Verriegelungselement mittels eines Federelements federnd gelagert. Mittels der seitens des Federelements ausgeübten Federkraft ist das Verriegelungselement in Richtung der Nut des Bajonettrings gedrückt, wenn sich der Bajonettring in der Spannstellung der Spannzange in seiner Verschlussposition befindet. Für den Fall, dass in der Spannstellung der Spannzange der Bajonettring nicht in der Verschlussposition angeordnet ist, drückt der Bajonettring das oder jedes Verriegelungselement entgegen der Federkraft in eine Sicherungsstellung im feststehenden Teil des Spannfutters.

Da somit durch die Federlagerung das Verriegelungselement dem durch den Bajonettring ausgeübten Druck ausweichen kann, wird bei einer Feststellung des Bajonettrings ein Beschädigen des Verriegelungselements vermieden.

Die Erfindung wird im Folgenden anhand der Zeichnungen erläutert. Es zeigen:
- Figur 1:: Teildarstellung des Ausführungsbeispiels der Spannvorrichtung gemäß DE 20 2013 103 278 mit einem Bajonettverschluss zur Fixierung einer Spannzange in einer Spannvorrichtung.
- Figur 2:: Einzeldarstellung der Komponenten der Spannvorrichtung gemäß Figur 1.
- Figur 3:: Schnittdarstellung der Spannvorrichtung gemäß Figur 1 bei geöffnetem Bajonettverschluss.
- Figur 4:: Schnittdarstellung der Spannvorrichtung gemäß Figur 1 bei geschlossenem Bajonettverschluss.
- Figur 5:: Ausführungsbeispiel der erfindungsgemäßen Spannvorrichtung.
- Figur 6:: Schnittdarstellung der Spannvorrichtung gemäß Figur 5
a) in der Spannstellung der Spannzange
b) in der Lösestellung der Spannzange

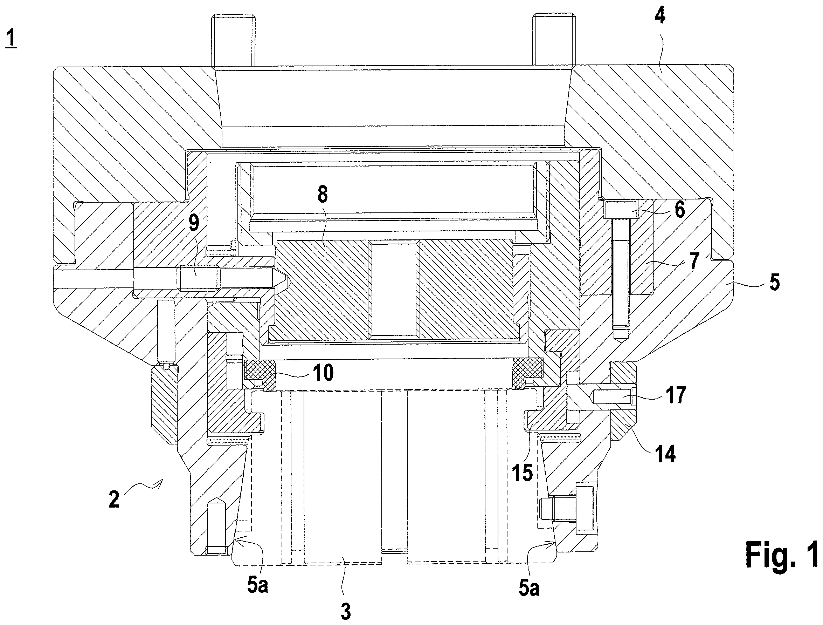

Die Figuren 1 bis 4 zeigen die aus der DE 20 2013 103 278 bekannte Spannvorrichtung 1.

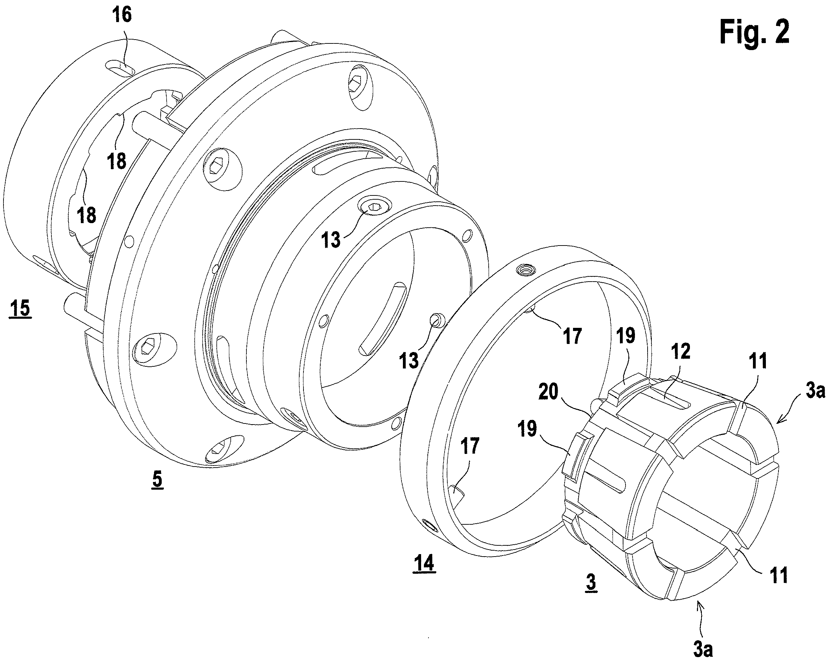

Figur 1 zeigt eine Teildarstellung der Spannvorrichtung 1, welche zum Spannen eines Werkstücks dient. Dabei zeigt Figur 1 das Spannfutter 2 und die Spannzange 3 der Spannvorrichtung 1. Nicht dargestellt sind die Mittel zur Betätigung der im Spannfutter 2 gelagerten Spannzange 3, die zum Bewegen der Spannzange 3 und damit zum Klemmen oder Freigeben des ebenfalls nicht dargestellten Werkstücks dienen. Diese Mittel können in bekannter Weise eine Antriebseinheit aufweisen, mittels derer eine Linearbewegung einer Zugstange in Achsrichtung erzeugt wird, die zur Betätigung der Spannzange 3 dient. Komponenten der in Figur 1 dargestellten Anordnung sind in Figur 2 als separate Teile dargestellt.

Das Spannfutter 2 der Spannvorrichtung 1 besteht, wie aus Figur 1 ersichtlich, aus einem Futterflansch 4 und einem Futterkörper 5, der auch in Figur 2 separat dargestellt ist. Ein zwischen dem Futterflansch 4 und dem Futterkörper 5 liegender Anschlaghalter 7 ist über Zylinderschrauben 6 mit dem Futterkörper 5 verschraubt.

Im Inneren des Spannfutters 2 ist ein Wechselanschlag 8 gelagert und mit einem Klemmstift 9 fixiert. Der Wechselanschlag 8 bildet ein austauschbares Referenzelement, mit welchem eine Adaption mit Axialanschlägen für unterschiedliche in der Spannzange 3 gelagerte Werkstücke erhalten wird.

Der Futterkörper 5 weist eine stirnseitig ausmündende, von konisch verlaufenden Anlageflächen 5a begrenzte Öffnung auf, in welche die Spannzange 3 eingesetzt wird. Figur 1 zeigt die in diese Öffnung eingesetzte Spannzange 3, wobei an deren hinterem, in die Öffnung eingeführtem Rand ein im Futterkörper 5 gelagerter Dichtungsring 10 anschließt, der einen Verriegelungsbereich, in dem die Spannzange 3 im Spannfutter 2 fixiert wird, gegen ein Eindringen von Spänen und sonstigen Verschmutzungen schützt.

Die Spannzange 3 besteht, wie insbesondere aus Figur 2 ersichtlich, aus sechs identisch ausgebildeten Spannzangensegmenten 3a, wobei jeweils benachbarte Spannzangensegmente 3a über in axialer Richtung der Spannzange 3 verlaufende elastische Elemente 11 verbunden sind. Die elastischen Elemente 11 sind als Formteile, bestehend aus Gummimischungen, ausgebildet. Diese elastischen Elemente 11 bilden elastische Kopplungen zwischen den Spannzangensegmenten 3a, so dass bei Einwirken von Druckkräften auf die äußere Mantelfläche der Spannzange 3 die elastischen Elemente 11 zusammengedrückt werden und so die Spannzangensegmente 3a in radialer Richtung zusammengeschoben werden können.

Die Spannzange 3 ist im Futterkörper 5 verdrehsicher gelagert. Als Verdrehsicherung sind an der Mantelfläche der Spannzange 3 in axialer Richtung verlaufende Nuten 12 vorgesehen. Im vorliegenden Fall ist an jedem Spannzangensegment 3a eine Nut 12 vorgesehen. In diese Nuten 12 greifen im Futterkörper 5 gelagerte Zylinderschrauben 13, wodurch die Spannzange 3 im Futterkörper 5 verdrehsicher gelagert ist.

Die Spannzange 3 wird mittels eines Bajonettverschlusses werkzeuglos und damit ohne jegliche Hilfswerkzeuge im Spannfutter 2 fixiert. Der Bajonettverschluss weist einen an der Außenseite der Futterkörper 5 gelagerten Betätigungsring 14 auf, der von einer Bedienperson betätigt, das heißt gedreht werden kann. Weiterhin weist der Bajonettverschluss einen konzentrisch zum Betätigungsring 14 angeordneten und innerhalb diesem liegenden Bajonettring 15 auf, der zum Ver- und Entriegeln der Spannzange 3 dient.

Der Bajonettring 15 weist in seiner Mantelfläche Nuten 16 auf, in welche Stifte 17 greifen, die im Betätigungsring 14 gelagert sind und von dessen innerer Mantelfläche in radialer Richtung hervorstehen. Damit wird eine Drehbewegung des Betätigungsrings 14 auf den Bajonettring 15 übertragen.

Zur Fixierung der Spannzange 3 im Spannfutter 2 weist der Bajonettring 15 an einer Stirnseite Laschen 18 auf, die in radialer Richtung verlaufend in den vom Bajonettring 15 umschlossenen Hohlraum ragen. Die Laschen 18 sind identisch ausgebildet und jeweils durch Zwischenräume voneinander getrennt. Auch die Zwischenräume sind identisch ausgebildet, so dass die Laschen 18 in Umfangsrichtung des Bajonettrings 15 äquidistant angeordnet sind.

Korrespondierend zu den Laschen 18 am Bajonettring 15 sind im Bereich des hinteren, in das Spannfutter 2 führenden Bereichs der Spannzange 3 Stege 19 vorgesehen, die an der Mantelfläche der Spannzange 3 in radialer Richtung ausmünden. Im vorliegenden Fall sind sechs Stege 19 vorgesehen die durch Nuten 20 getrennt sind. Die Stege 19 sind jeweils identisch ausgebildet. Auch die Nuten 20 zwischen den Stegen 19 sind identisch ausgebildet, so dass die Stege 19 in Umfangsrichtung der Spannzange 3 äquidistant angeordnet sind. Die Längen der Stege 19, das heißt deren Ausdehnungen in Umfangsrichtung, sind an die Längen der Laschen 18 des Bajonettrings 15 angepasst.

Durch Drehen des Betätigungsrings 14 um 30° kann der Bajonettring 15 zwischen einer Öffnungsposition und einer Verschlussposition gedreht werden. Bei Einführen der Spannzange 3 in das Spannfutter 2 ist der Bajonettring 15 in seiner Öffnungsposition. Sobald die Spannzange 3 bis in ihre Sollposition in das Spannfutter 2 eingeschoben ist, liegen, da sich der Bajonettring 15 in der Öffnungsposition befindet, die Laschen 18 des Bajonettrings 15 in den Bereichen der Nuten 20. Dann wird zur Verriegelung der Spannzange 3 in dem Spannfutter 2 der Betätigungsring 14 um 30° gedreht bis der Bajonettring 15 in der Verschlussposition liegt. In der Verschlussposition liegen die Laschen 18 des Bajonettrings 15 an den Vorderseiten der Stege 19 der Spannzange 3 an und sperren somit die Spannzange 3 gegen ein Herausnehmen aus dem Spannfutter 2. Soll die Spannzange 3 aus dem Spannfutter 2 wieder entnommen werden, wird der Bajonettring 15 wieder in die Öffnungsposition überführt. Das Herausnehmen der Spannzange 3 kann durch eine Feder oder allgemein einen Federmechanismus unterstützt werden.

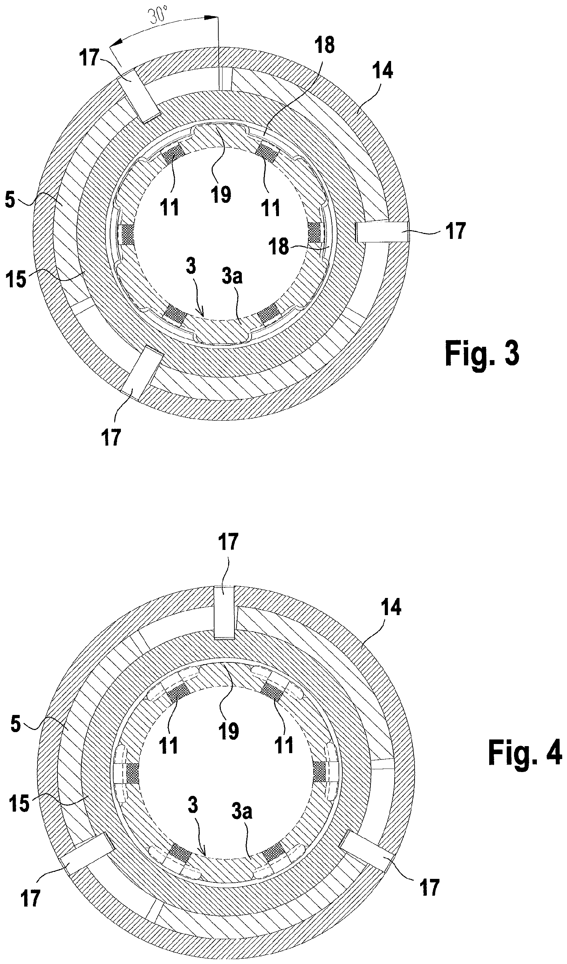

Die Schnittdarstellung gemäß Figur 3 zeigt den Bajonettring 15 in der Öffnungsposition, während die Schnittdarstellung gemäß Figur 4 den Bajonettring 15 in der Verschlussposition zeigt. Wie aus Figur 3 ersichtlich, befinden sich die Laschen 18 des Bajonettrings 15 in der Öffnungsposition im Bereich der Nuten 20 zwischen den Stegen 19 der Spannzange 3 und überdecken somit einen Teil der elastischen Elemente 11. Bei der in Figur 4 dargestellten Verschlussposition sind die Laschen 18 vor die Stege 19 geschoben und daher in Figur 4 nicht mehr sichtbar, jedoch liegen jetzt die elastischen Elemente 11 frei.

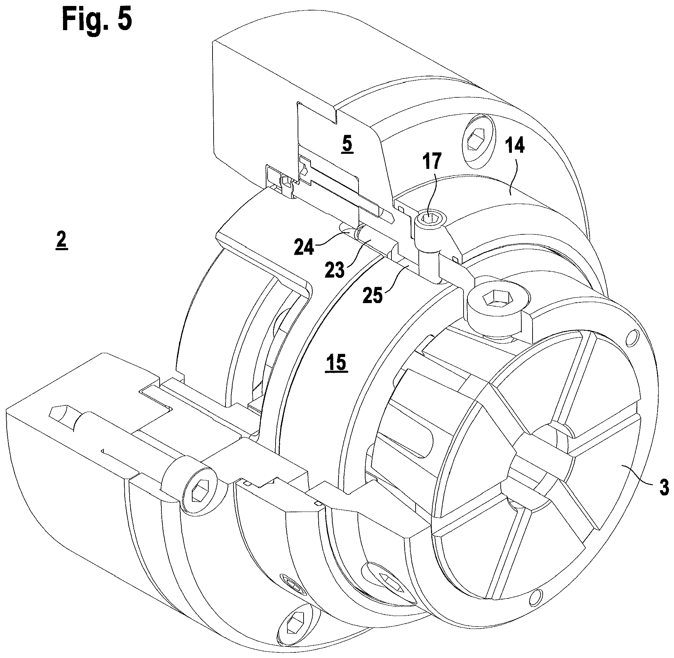

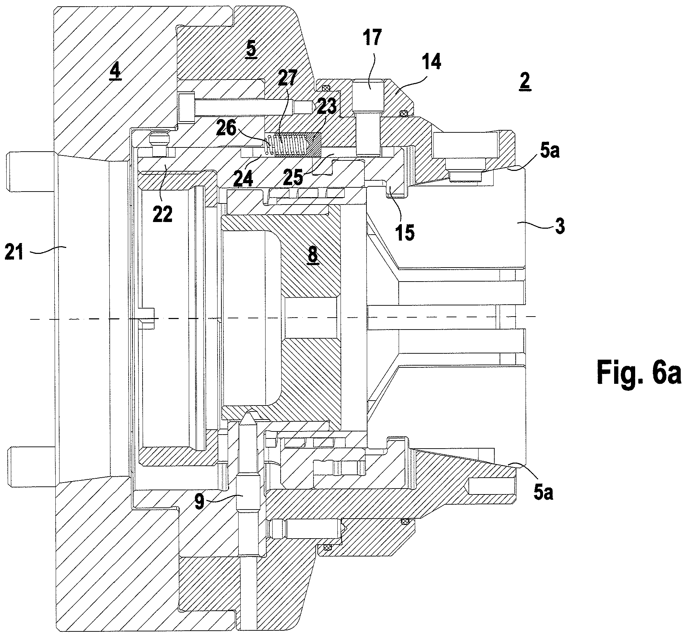

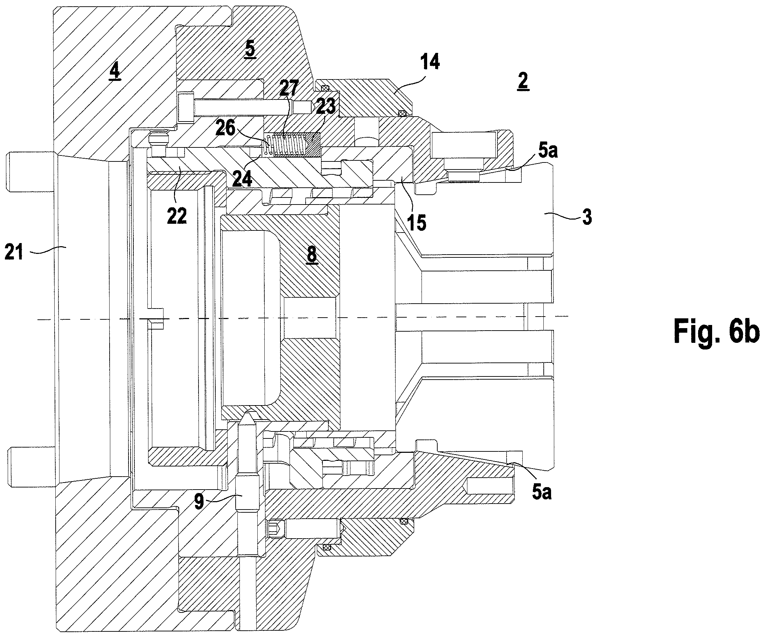

Die Figuren 5, 6a, 6b zeigen ein Ausführungsbeispiel der erfindungsgemäßen Spannvorrichtung 1. Diese Spannvorrichtung 1 entspricht hinsichtlich ihres Aufbaus weitgehend der Ausführungsform der Spannvorrichtung 1 gemäß den Figuren 1 bis 4. Demzufolge sind entsprechende Bauteile in den Figuren 5, 6a, 6 einerseits und in den Figuren 1 bis 4 andererseits mit denselben Bezugszeichen gekennzeichnet.

Figur 6a zeigt die Spannvorrichtung 1 wenn die Spannzange 3 in ihre Spannstellung verfahren ist, in der sie ein nicht dargestelltes Werkstück oder Werkzeug klemmt und fixiert. Figur 6b zeigt die Spannzange 3 in ihrer Lösestellung, in welcher sie das Werkstück oder Werkzeug freigibt. Zur Bewegung der Spannzange 3 zwischen der Spannstellung und der Lösestellung ist eine Spannhülse 21 vorgesehen, die über ein Spannteil 22 mit dem Bajonettring 15 verbunden ist, wobei der Bajonettring 15 in seiner Verschlussposition die Spannzange 3 fixiert. Eine Linearbewegung der Spannhülse 21 wird über das Spannteil 22 auf den Bajonettring 15 und die Spannzange 3 übertragen, so dass der Bajonettring 15 und die Spannzange 3 gegenüber dem feststehenden Teil des Spannfutters 2, insbesondere dem Futterkörper 5, bewegt wird.

Die Linearbewegung zur Überführung der Spannzange 3 von der Lösestellung in die Spannstellung und umgekehrt erfolgt ordnungsgemäß, das heißt im fehlerfreien Fall, dann, wenn sich der Bajonettring 15 in seiner Verschlussposition befindet. Diese Situation zeigen die Figuren 5, 6a, 6b.

Weiterhin zeigen diese Abbildungen ein Verriegelungselement 23, mittels dessen der Bajonettring 15 gegen ein ungewolltes Lösen aus der Verschlussposition gesichert wird und dadurch ein unkontrolliertes Herauslösen des Werkstücks aus der Spannzange 3 vermieden wird.

In den Abbildungen ist zwar nur ein Verriegelungselement 23 sichtbar, jedoch sind insgesamt drei identisch ausgebildete Verriegelungselemente 23 vorgesehen, die jeweils um 120° zueinander versetzt in Umfangsrichtung des Spannfutters 2 angeordnet sind.

Jedes Verriegelungselement 23 ist im Futterkörper 5 gelagert, welcher ein feststehendes Teil des Spannfutters 2 bildet.

Wie insbesondere aus Figur 5 ersichtlich, ragt das Verriegelungselement 23 in eine Nut 24 des Spannteils 22. In der Verschlussposition des Bajonettrings 15 schließt an die Nut 24 des Spannteils 22 eine Nut 25 im Bajonettring 15 an, welche mit der Nut 24 des Spannteils 22 fluchtet.

Wie aus den Figuren 6a, 6b ersichtlich, weist das Verriegelungselement 23 die Form einer Hülse auf. Die Längsachse der Hülse verläuft in axialer Richtung des Spannfutters 2. Die dem Bajonettring 15 zugewandte Stirnseite der Hülse ist verschlossen. Die dem Bajonettring 15 abgewandte Stirnseite der Hülse ist offen. Über diese Öffnung ragt ein Federelement 26 in den Hohlraum der Hülse, wobei der hintere Teil des Federelements 26 am Futterkörper 5 abgestützt ist.

Die Funktionsweise des mit dem Verriegelungselement 23 gebildeten Verriegelungsmechanismus ist in dem in den Figuren 5, 6a, 6b dargestellten fehlerfreien Fall derart, dass nach Einführen eines Werkstücks in die Spannzange 3 der Bajonettring 15 in seine Verschlussposition gedreht wird, wodurch die Spannzange 3 am Spannfutter 2 fixiert ist. Zum Fixieren des Werkstücks wird mittels der Spannhülse 21 die Spannzange 3 von der in Figur 6b dargestellten Lösestellung in die in Figur 6a dargestellte Spannstellung eingefahren. Mit dieser Bewegung erfolgt auch gleichzeitig die Verriegelung des Bajonettrings 15, da dieser mit der Spannzange 3 mitbewegt wird, so dass in der Spannstellung der Spannzange 3 die Nut 25 im Bajonettring 15 im Bereich des Verriegelungselements 23 liegt, das heißt das Verriegelungselement 23 ragt in die Nut 25. Dadurch ist der Bajonettring 15 gegen ein ungewolltes Öffnen gesichert.

Bei einem fehlerhaften Betrieb könnte der Bajonettring 15 nicht korrekt geschlossen werden, bevor die Spannzange 3 in die Spannstellung bewegt wird. In diesem Fall fluchtet die Nut 25 des Bajonettrings 15 nicht mehr mit der Nut 24 im Spannteil 22, in der das Verriegelungselement 23 geführt ist. Bei Überführen der Spannzange 3 in die Spannstellung trifft daher das Vollmaterial des Bajonettrings 15 und nicht mehr die Nut 24 auf das Verriegelungselement 23. Wäre das Verriegelungselement 23 starr im Futterkörper 5 gelagert, würde der auftreffende Bajonettring 15 das Verriegelungselement 23 axial abscheren, das heißt zerstören. Da jedoch das Verriegelungselement 23 durch das Federelement 26 federnd gelagert ist, kann das Verriegelungselement 23 dem Bajonettring 15 ausweichen und ist so gegen Beschädigungen geschützt.

Die Ausführungsform der Figuren 5, 6a, 6b weist gegenüber der Spannvorrichtung 1 der Figuren 1 bis 4 noch eine Erweiterung dahingehend auf, dass im Bereich des Spannteils 22 eine Feder 27 vorgesehen ist. Diese Feder 27 bildet einen Auswurfmechanismus, der bewirkt, dass nach Lösen des Bajonettrings 15 die Spannzange 3 ausgeworfen oder wenigstens von den Anlageflächen gelöst wird, was die Entnahme der Spannzange 3 erleichtert.

### Bezugszeichenliste

- (1): Spannvorrichtung
- (2): Spannfutter
- (3): Spannzange
- (3a): Spannzangensegment
- (4): Futterflansch
- (5): Futterkörper
- (5a): Anlagefläche
- (6): Zylinderschraube
- (7): Anschlaghalter
- (8): Wechselanschlag
- (9): Klemmstifte
- (10): Dichtungsring
- (11): elastisches Element
- (12): Nut
- (13): Zylinderschraube
- (14): Betätigungsring
- (15): Bajonettring
- (16): Nut
- (17): Stift
- (18): Lasche
- (19): Stege
- (20): Nut
- (21): Spannhülse
- (22): Spannteil
- (23): Verriegelungselement
- (24): Nut
- (25): Nut
- (26): Federelement
- (27): Feder

## Patentansprüche

1. Spannvorrichtung (1) zum Spannen eines Werkstücks, mit einem Spannfutter (2) und einer im Spannfutter (2) gelagerten Spannzange (3), wobei ein Bajonettverschluss vorgesehen ist, mittels dessen die Spannzange (3) werkzeuglos am Spannfutter (2) befestigt oder von diesem gelöst werden kann, und wobei die Spannzange (3) gegen einen feststehenden Teil des Spannfutters (2) zwischen einer Spannstellung und einer Lösestellung bewegt werden kann, und wobei im feststehenden Teil des Spannfutters (2) wenigstes ein Verriegelungselement (23) gelagert ist, welches den Bajonettverschluss in der Spannstellung gegen ein Lösen sichert und welches den Bajonettverschluss in der Lösestellung für eine Betätigung freigibt, **dadurch gekennzeichnet, dass** der Bajonettverschluss einen manuell betätigbaren Betätigungsring (14) sowie einen in Wirkverbindung mit dem Betätigungsring (14) stehenden Bajonettring (15), mittels dessen die Spannzange (3) am Spannfutter (2) fixierbar ist, aufweist, und die Spannvorrichtung (1) dazu vorgesehen ist, dass in der Spannstellung das wenigstens eine Verriegelungselement (23) den Bajonettring (15) gegen ein Verdrehen sperrt und in der Lösestellung das wenigstens eine Verriegelungselement (23) den Bajonettring (15) freigibt.

2. Spannvorrichtung nach Anspruch 1, **dadurch gekennzeichnet, dass** der Bajonettring (15) mit der Spannzange (3) zwischen der Lösestellung und der Spannstellung bewegt wird.

3. Spannvorrichtung nach einem der Ansprüche 1 oder 2, **dadurch gekennzeichnet, dass** in der Spannstellung das wenigstens eine Verriegelungselement (23) in eine Nut (25) des Bajonettrings (15) greift.

4. Spannvorrichtung nach einem der Ansprüche 1 bis 3, **dadurch gekennzeichnet, dass** drei identische, in Umfangsrichtung jeweils um 120° zueinander versetzte Verriegelungselemente (23) vorgesehen sind.

5. Spannvorrichtung nach einem der Ansprüche 1 oder 2, **dadurch gekennzeichnet, dass** durch Drehen des Betätigungsrings (14) der Bajonettring (15) zwischen einer Verschlussposition, in welcher der Bajonettring (15) die Spannzange (3) am Spannfutter (2) fixiert, und einer Öffnungsposition, in welcher der Bajonettring (15) die Spannzange (3) am Spannfutter (2) freigibt, bewegbar ist, wobei nur in der Verschlussposition des Bajonettrings (15) das oder jedes Verriegelungselement (23) der jeweiligen Nut (25) so zugeordnet ist, dass das Verriegelungselement (23) bei Bewegen der Spannzange (3) in die Spannstellung in die Nut (25) einfahren kann.

6. Spannvorrichtung nach einem der Ansprüche 1 bis 5, **dadurch gekennzeichnet, dass** das oder jedes Verriegelungselement (23) mittels eines Federelements (26) federnd gelagert ist, wobei mittels der seitens des Federelements (26) ausgeübten Federkraft das Verriegelungselement (23) in Richtung der Nut (25) des Bajonettrings (15) gedrückt ist, wenn sich der Bajonettring (15) in der Spannstellung der Spannzange (3) in seiner Verschlussposition befindet.

7. Spannvorrichtung nach Anspruch 6, **dadurch gekennzeichnet, dass** für den Fall, dass in der Spannstellung der Spannzange (3) der Bajonettring (15) nicht in der Verschlussposition angeordnet ist, der Bajonettring (15) das oder jedes Verriegelungselement (23) entgegen der Federkraft in eine Sicherungsstellung im feststehenden Teil des Spannfutters (2) drückt.

8. Spannvorrichtung nach einem der Ansprüche 6 oder 7, **dadurch gekennzeichnet, dass** das oder jedes Verriegelungselement (23) in Form einer Hülse ausgebildet ist, welche an einer Stirnseite eine Öffnung aufweist, durch welche das Federelement (26) in diesen Hohlraum der Hülse geführt ist.

9. Spannvorrichtung nach einem der Ansprüche 1 bis 8, **dadurch gekennzeichnet, dass** das Spannfutter (2) als feststehendes Teil einen Futterkörper (5) aufweist, in welchem das oder jedes Verriegelungselement (23) gelagert ist.

10. Spannvorrichtung nach einem der Ansprüche 1 bis 9, **dadurch gekennzeichnet, dass** eine Spannhülse (21) vorgesehen ist, mittels derer die Spannzange (3) zwischen der Lösestellung und der Spannstellung bewegbar ist.

## Claims

1. A clamping device (1) for clamping a workpiece, having a chuck (2) and a collet chuck (3) mounted in the chuck (2), a bayonet lock being provided by means of which the collet chuck (3) can be fastened to or released from the chuck (2) without tools, and wherein the collet chuck (3) can be moved against a stationary part of the chuck (2) between a clamping position and a release position, and wherein at least one locking element (23) is mounted in the stationary part of the chuck (2), which secures the bayonet catch in the clamping position against loosening and which releases the bayonet catch in the loosening position for actuation, **characterized in that** the bayonet catch has a manually actuable actuating ring (14) and a bayonet ring (15) which is operatively connected to the actuating ring (14) and by means of which the collet chuck (3) can be fixed to the chuck (2), and the clamping device (1) is provided such that, in the clamping position, said at least one locking element (23) blocks the bayonet ring (15) against rotation and, in the release position, said at least one locking element (23) releases the bayonet ring (15).

2. A clamping device according to claim 1, **characterised in that** the bayonet ring (15) is moved with the collet chuck (3) between the release position and the clamping position.

3. A clamping device according to one of claims 1 or 2, **characterised in that** in the clamping position said at least one locking element (23) engages in a groove (25) of the bayonet ring (15).

4. A clamping device according to one of claims 1 to 3, **characterised in that** three identical locking elements (23), each offset by 120° in the circumferential direction, are provided.

5. A clamping device according to one of claims 1 or 2, **characterised in that**, by rotating the actuating ring (14), the bayonet ring (15) is fixed between a locking position, in which the bayonet ring (15) fixes the collet chuck (3) to the chuck (2), and an opening position, in which the bayonet ring (15) releases the collet chuck (3) on the chuck (2), is movable, the or each locking element (23) being assigned to the respective groove (25) only in the closed position of the bayonet ring (15) in such a way that the locking element (23) can retract into the groove (25) into the clamping position when the collet chuck (3) moves.

6. A clamping device according to one of claims 1 to 5, **characterised in that** the or each locking element (23) is resiliently mounted by means of a spring element (26), the locking element (23) being pressed in the direction of the groove (25) of the bayonet ring (15) by means of the spring force exerted by the spring element (26) when the bayonet ring (15) is in its locking position in the tensioning position of the collet chuck (3).

7. A clamping device according to claim 6, **characterised in that**, in the event that, in the clamping position of the collet chuck (3), the bayonet ring (15) is not arranged in the closed position, the bayonet ring (15) presses the or each locking element (23) against the spring force into a securing position in the stationary part of the chuck (2).

8. A clamping device according to one of claims 6 or 7, **characterised in that** the or each locking element (23) is provided in the form of a sleeve, which has an opening at one end through which the spring element (26) is guided into this cavity of the sleeve.

9. A clamping device according to one of claims 1 to 8, **characterised in that** the clamping chuck (2) comprises as a fixed part a chuck body (5) in which the or each locking element (23) is supported.

10. A clamping device according to one of claims 1 to 9, **characterised in that** a clamping sleeve (21) is provided by means of which the collet chuck (3) can be moved between the release position and the clamping position.

## Revendications

1. Dispositif de serrage (1) pour serrer une pièce d'usinage, comportant un mandrin (2) et une bague de serrage (3) montés dans le mandrin (2), une serrure à baïonnette étant prévue au moyen de laquelle la bague de serrage (3) peut être fixée ou retirée du mandrin (2) sans outils, et dans lequel la bague de serrage (3) peut être déplacé contre une partie fixe du mandrin (2) entre une position de serrage et une position de libération, et dans lequel au moins un élément de verrouillage (23) est monté dans la partie fixe du mandrin (2), qui empêche le desserrage du loquet à baïonnette dans la position de serrage et libère le loquet à verrouillage dans la position de desserrage pour l'actionnement, **caractérisé en ce que** le loquet à baïonnette comporte une bague d'actionnement (14) pouvant être actionnée manuellement et une bague à baïonnette (15) reliée de manière opérationnelle à la bague d'actionnement (14) et au moyen de laquelle la bague de serrage (3) peut être fixée au mandrin (2) et le dispositif de serrage (1) est prévu de telle sorte que, dans la position de serrage, ledit au moins un élément de verrouillage (23) bloque la bague à baïonnette (15) et que, dans la position de libération, ledit au moins un élément de verrouillage (23) libère la bague à baïonnette (15).

2. Dispositif de serrage selon la revendication 1, **caractérisé en ce que** la bague à baïonnette (15) se déplace avec la bague de serrage (3) entre la position de libération et la position de serrage.

3. Dispositif de serrage selon l'une des revendications 1 ou 2, **caractérisé en ce que** dans la position de serrage dudit au moins un élément de verrouillage (23) vient en prise dans une gorge (25) de la bague à baïonnette (15).

4. Dispositif de serrage selon l'une quelconque des revendications 1 à 3, **caractérisé en ce que** trois éléments de verrouillage identiques (23), chacun décalé de 120 ° dans la direction circonférentielle, sont prévus.

5. Dispositif de serrage selon l'une quelconque des revendications 1 ou 2, **caractérisé en ce que**, par rotation de la bague d'actionnement (14), la bague à baïonnette (15) est fixée entre une position de verrouillage dans laquelle la bague à baïonnette (15) fixe la bague de serrage (3) au mandrin (2), et une position d'ouverture, dans laquelle la bague à baïonnette (15) libère la bague de serrage (3) sur le mandrin (2), est mobile, le ou chaque élément de verrouillage (23) étant associé à la gorge respective (25) uniquement dans la position fermée de la bague à baïonnette (15) de telle manière l'élément de verrouillage (23) peut se rétracter dans la gorge (25) dans la position de serrage lorsque la bague de serrage (3) se déplace.

6. Dispositif de serrage selon l'une quelconque des revendications 1 à 5, **caractérisé en ce que** le ou chaque élément de verrouillage (23) est monté de manière élastique au moyen d'un élément de ressort (26), l'élément de verrouillage (23) étant pressé dans la direction de la gorge (25) de la bague à baïonnette (15) au moyen de la force élastique exercée par l'élément élastique (26) lorsque la bague à baïonnette (15) est dans sa position de verrouillage dans la position de tension de la bague de serrage (3).

7. Dispositif de serrage selon la revendication 6, **caractérisé en ce que** dans le cas où, dans la position de serrage de la bague de serrage (3), la bague à baïonnette (15) n'est pas disposée dans la position fermée, la bague à baïonnette (15) presse le ou chaque élément de verrouillage (23) contre la force du ressort dans une position de fixation dans la partie fixe du mandrin (2).

8. Dispositif de serrage selon l'une des revendications 6 ou 7, **caractérisé en ce que** le ou chaque élément de verrouillage (23) est prévu sous la forme d'un manchon, qui comporte une ouverture à une extrémité à travers laquelle l'élément à ressort (26) est guidé dans cette cavité du manchon.

9. Dispositif de serrage selon l'une quelconque des revendications 1 à 8, **caractérisé en ce que** le mandrin de serrage (2) comprend une partie fixe d'un corps de mandrin (5) dans lequel le ou chaque élément de verrouillage (23) est pris en charge.

10. Dispositif de serrage selon l'une quelconque des revendications 1 à 9, **caractérisé en ce que** peut être déplacé d'un manchon de serrage (21) est prévu au moyen duquel la bague de serrage (3) entre la position de libération et la position de serrage.
